# EUROPEAN PATENT APPLICATION

(11) **EP 3 643 952 A1**
(43) Date of publication of application: **29.04.2020**
(21) Application number: 18821492.8
(22) Date of filing: 19.06.2018
(51) Int. Cl.: F16K 15/08, F16K 1/44

(54) **CHECK VALVE**

(30) Priority: 23.06.2017 JP 2017122936
(71) Applicant: Eagle Industry Co., Ltd., Minato-ku Tokyo 105-8587 (JP)
(72) Inventor: KITO, Masato, Tokyo 105-8587 (JP); MORI, Koichi, Tokyo 105-8587 (JP)
(74) Representative: TBK
(86) International application number: PCT/JP2018/023252
(87) International publication number: WO 2018/235806

(57) **Abstract**

A check valve which allows a sub valve body to have an improved sealing function when the check valve has an increased size. When a sub valve body 300 is seated on a second valve seat 231 and a third valve seat 440, S2 ≥ S1 is satisfied where a seal area S1 is a total of a contact area of the sub valve body 300 and the second valve seat 231 and a contact area of the sub valve body 300 and the third valve seat 440, and a pressure-receiving area S2 is an area of a non-contact region at a lower end surface of the sub valve body 300 between a contact region of the sub valve body 300 and the second valve seat 231 and a contact region of the sub valve body 300 and the third valve seat 440.

## Description

### [Technical Field]

The present invention relates to a check valve which prevents backflow of a fluid.

### [Background Art]

The applicant has suggested a check valve for preventing backflow of a fluid which is provided with a guide member (a support member), and the guide member guides a fluid from the lower side in the vertical direction to flow horizontally and radially outward to the position in which a valve body (hereinafter as a main valve body) is seated on a valve seat (see PTL 1). PTL 1 also discloses a sub valve body (an auxiliary valve body) seated on both the upper surface of the main valve body and the upper surface of the guide member for the purpose of reducing leakage of a fluid from an annular gap between the main valve body and the guide member. The technique allows valve closing operation to be performed at high speed.

It has been found however that as the check valve has an increased size, the sub valve body functions insufficiently, and leakage of a fluid is more likely to happen between the main valve body and the guide member. This is probably because increase in the size of a device in general is more likely to increase the dimensional tolerance of each of the members, the deformation of the members may become greater more easily, and therefore increase in the size of the check valve may lead to insufficient adhesion between the sub valve body and the main valve body and between the sub valve body and the guide member.

### [Citation List]

### [Patent Literature]

[PTL 1]
WO 2015/050091

### [Summary of Invention]

### [Technical Problem]

It is an object of the present invention to provide a check value which allows a sub valve body to have an improved sealing function while the size of the check valve is increased.

### [Solution to Problem]

In order to solve the problem, the following means is provided according to the present disclosure.

More specifically, a check valve according to the present disclosure allows a fluid to flow upward from a vertically lower side and stops a fluid flowing downward from a vertically upper side, the check valve comprising:
a tubular member having a fluid inlet and a first valve seat formed so as to surround an upper side opening of the inlet;
a main valve body having a tubular portion, a valve portion extending radially outward from a lower end side of the tubular portion and configured to be seated on the first valve seat, and a valve seat forming portion extending radially outward from an upper end side of the tubular portion and provided with a second valve seat on an upper surface thereof;
a guide member having a main valve body guide surface provided at an outer peripheral surface to guide the tubular portion vertically, a fluid guide portion provided below the main valve body guide surface to guide a fluid flowing from the inlet radially outward and horizontally, and a third valve seat provided above the main valve body guide surface; and
a sub valve body configured to move up and down, and configured to be seated on both the second valve seat and third valve seat to block an annular gap formed between the main valve body and the guide member, wherein
the following expression is satisfied when the sub valve body is seated on the second and third valve seats,
   S2 ≥ S1
   wherein a seal area S1 is a total of a contact area of the sub valve body and the second valve seat and a contact area of the sub valve body and the third valve seat, and a pressure-receiving area S2 is an area of a non-contact region at a lower end surface of the sub valve body between a contact region of the sub valve body and the second valve seat and a contact region of the sub valve body and the third valve seat.

According to the present disclosure, large downward force acts on the sub valve body when the pressure on the upper side in the vertical direction with respect to the sub valve body is higher than the pressure on the lower side because S2 (the pressure-receiving area) ≥ S1 (the seal area) is satisfied. This reduces leakage of a fluid to the annular gap between the main valve body and the guide member. Thus, the sub valve body can have an improved sealing function. Note that when the pressure on the lower side in the vertical direction becomes higher than the pressure on the upper side, large upward force acts on the sub valve body, so that the valve can be opened immediately. Thus, responsiveness in opening the valve can be improved.

### [Advantageous Effects of Invention]

As in the foregoing, even when the check valve has an increased size, the sub valve body can have an improved sealing function.

### [Brief Description of Drawings]

[Fig. 1]

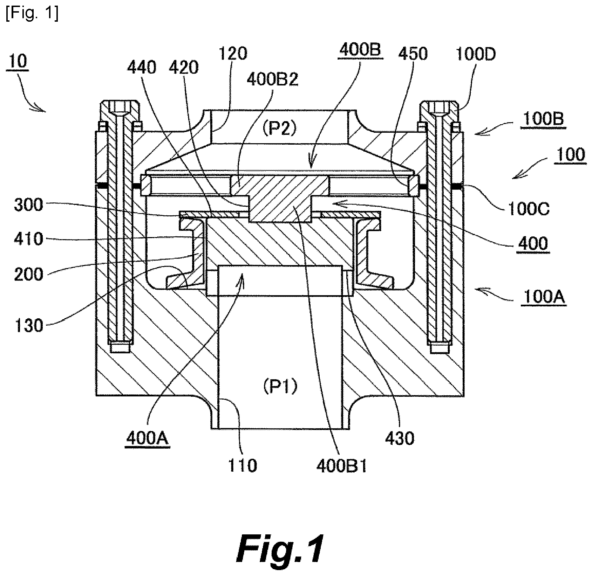

   Fig. 1 is a schematic sectional view of a check valve according to an embodiment of the present disclosure.
[Fig. 2]

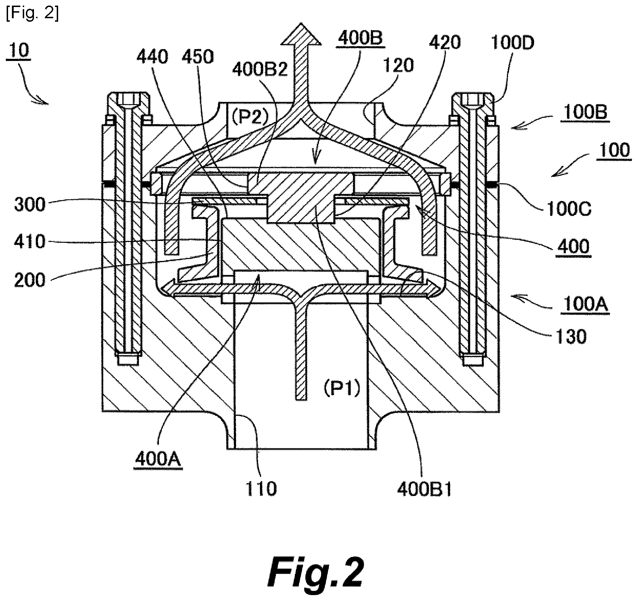

   Fig. 2 is a schematic sectional view of the check valve according to the embodiment.
[Fig. 3]

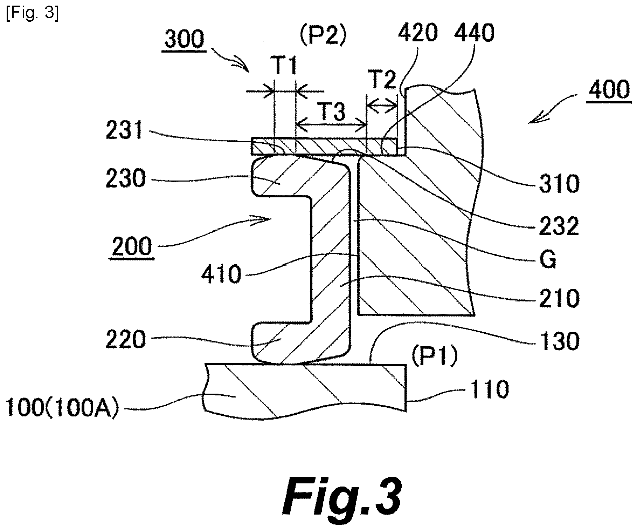

   Fig. 3 is a view for illustrating the mechanism of the check valve according to the embodiment.
[Fig. 4]

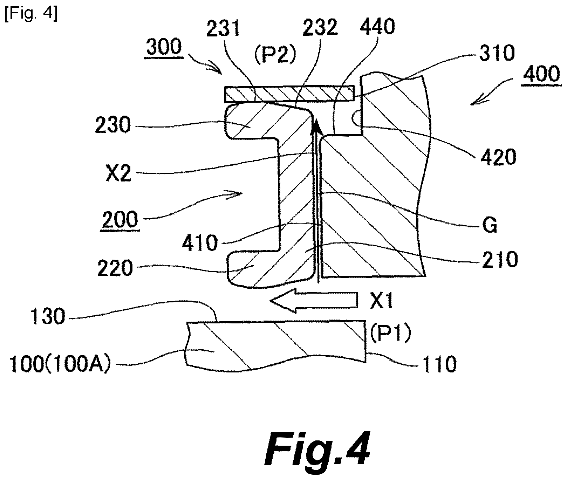

   Fig. 4 is a view for illustrating the mechanism of the check valve according to the embodiment.
[Fig. 5]

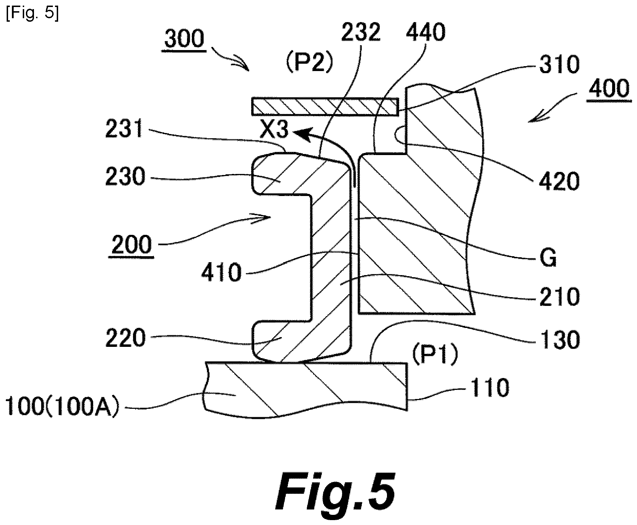

   Fig. 5 is a view for illustrating the mechanism of the check valve according to the embodiment.
[Fig. 6]

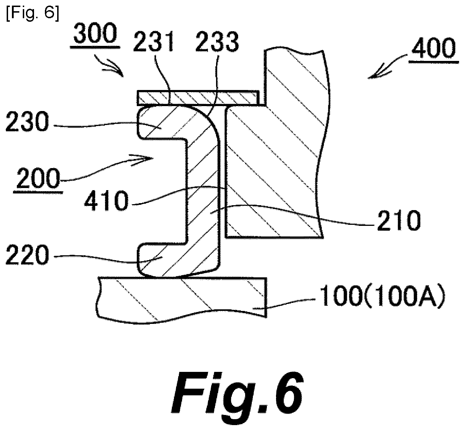

   Fig. 6 is a schematic partial sectional view of a check valve according to a first modification of the disclosure.
[Fig. 7]

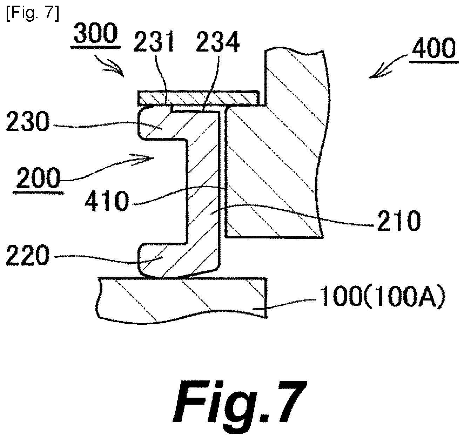

   Fig. 7 is a schematic partial sectional view of a check valve according to a second modification of the disclosure.
[Fig. 8]

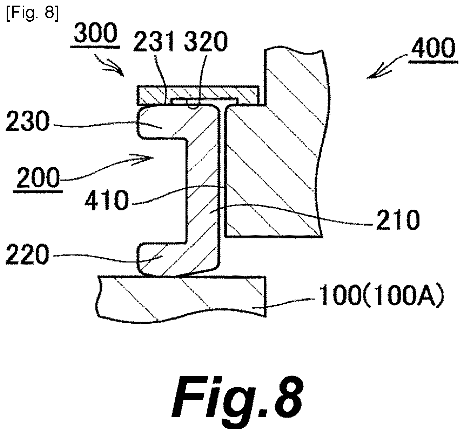

   Fig. 8 is a schematic partial sectional view of a check valve according to a third modification of the disclosure.
[Fig. 9]

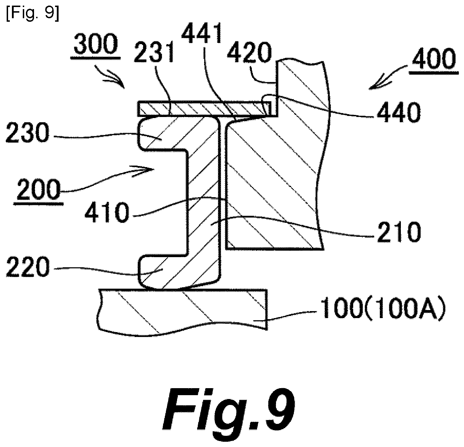

   Fig. 9 is a schematic partial sectional view of a fourth modification of the disclosure.

### [Description of Embodiments]

A mode for carrying out the invention will be described in detail by illustrating an embodiment in conjunction with the accompanying drawings. Note that the sizes, materials, and shapes of components, their relative positional arrangements, and other elements in the following description of the embodiment are not intended to limit the scope of the invention unless otherwise specified.

### (Embodiment)

With reference to Figs. 1 to 5, a check valve according to an embodiment of the present disclosure will be described. Figs. 1 and 2 are schematic sectional view of the check valve according to the embodiment. Note that the valve is closed in Fig. 1 and opened in Fig. 2. The check valve has substantially rotational symmetry, and Figs. 1 and 2 each show a schematic section of the check valve taken along a plane including a central axis of the check valve. Figs. 3 to 5 are views for illustrating the mechanism of the check valve. Note that Figs. 3 to 5 are partly enlarged and simplified views of Figs. 1 and 2, respectively. Fig. 3 shows the valve's closed state, Fig. 4 shows its opened state, and Fig. 5 shows a closing process of the valve.

### <General Structure of Check Valve>

With reference to Figs. 1 to 3 in particular, the general structure of the check valve will be described. The check valve 10 can be used to allow a fluid (a liquid for example) to flow upward from the lower side in the vertical direction and stop a downward flow of the fluid from the upper side in the vertical direction. Note that the upper side in the drawings represents the upper side in the vertical direction and the lower side in the drawings represents the lower side in the vertical direction. The check valve 10 includes a case 100, a main valve body 200, a sub valve body 300, and a guide member 400 which guides movements of the main valve body 200 and the sub valve body 300 in the vertical direction and the flowing direction of the fluid.

The case 100 includes a first case 100A as a tubular member having an inlet 110, a second case 100B having an outlet 120, and a gasket 100C which seals a gap between the first case 100A and the second case 100B. The first case 100A, the second case 100B, and the gasket 100C are fixed by a plurality of bolts 100D. The first case 100A has a first valve seat 130 formed so as to surround an opening on an upper side of the inlet 110.

The main valve body 200 includes a tubular portion 210, a valve portion 220 which extends radially outward from the lower end side of the tubular portion 210, and a valve seat forming portion 230 which extends radially outward from the upper end side of the tubular portion 210. The tubular portion 210 includes a cylindrical portion. The valve portion 220 includes an inclined part which extends radially outward and expands downward. The lowermost part of the valve portion 220 is configured to be seated on the first valve seat 130. The uppermost end (the annular flat part) of the valve seat forming portion 230 forms a second valve seat 231. The second valve seat 231 and the inner circumferential surface of the tubular portion 210 are connected by a tapered surface 232. The sub valve body 300 includes a disk-shaped member having a through hole 310 in the center.

The guide member 400 includes a first guide member 400A and a second guide member 400B fixed coaxially with the first guide member 400A. Note that Figs. 3 to 5 illustrate the first and second guide members 400A and 400B as an integrated member for the sake of simplification.

The lower end side of the first guide member 400A of the guide member 400 is fixed to the first case 100A by a spigot joint. The outer peripheral surface of the first guide member 400A is a cylindrical surface configured to serve as a main valve body guide surface 410 which guides the tubular portion 210 of the main valve body 200 in the vertical direction. More specifically, the first guide member 400A is inserted in the tube of the tubular portion 210 of the main valve body 200, so that there is a small annular gap G between the outer peripheral surface of the first guide member 400A and the inner peripheral surface of the tubular portion 210. Thus, the main valve body 200 moves in the vertical direction substantially coaxially with the first guide member 400A. The lower end of the first guide member 400A serves as a fluid guide portion which guides a fluid entering through the inlet 110 radially outward and horizontally, and a plurality of grooves 430 are provided at intervals in the peripheral direction at the lower end of the first guide member 400A. The first guide member 400A is provided with a third valve seat 440 above the main valve body guide surface 410. More specifically, a part (an annular flat part) in the upper end of the first guide member 400A which surrounds a part where the second guide member 400B is fixed is the third valve seat 440. The lower end of the first guide member 400A guides a fluid flowing upward from the lower side in the vertical direction in radially 360 degree all directions, that is, radially outwardly in horizontal directions from the center of the inlet. The fluid flowing radially outward and horizontally from the center of the inlet 110 branches into a number equal to the number of the grooves 430 and then flows toward between the valve portion 220 of the main valve body 200 and the first valve seat 130. Note that, instead of fixing the guide member to the first case member, the guide member may be provided so that a gap is formed between the lower end of the guide member and the surface of the first case on the first valve seat side depending on the structure and the manner of fixing the guide member (In this case, the guide member does not need the grooves for forming channels). In this configuration, the fluid coming upward from the lower side in the vertical direction is guided by the lower end of the guide member to flow radially outward and horizontally from the center of the inlet, in radially 360 degree all the directions, and directly toward between the valve portion 220 of the main valve body 200 and the first valve seat 130.

The second guide member 400B includes, as integral parts thereof, a cylindrical small diameter part 400B1 having a small diameter and a cylindrical large diameter part 400B2 provided coaxially with the small diameter part 400B1 above the small diameter part 400B1 and having a greater diameter than that of the small diameter part 400B1. The outer peripheral surface of the small diameter part 400B1 serves as a sub valve body guide surface 420 which guides the sub valve body 300 in the vertical direction. More specifically, the small diameter part 400B1 is inserted in the through hole 310 of the sub valve body 300, so that there is a small gap formed between the outer peripheral surface of the small diameter part 400B1 and the inner peripheral surface of the through hole 310. Thus, the sub valve body 300 moves in the vertical direction substantially coaxially with the second guide member 400B. A part of the large diameter part 400B2 in the vicinity of its outer periphery is held and fixed between the first case 100A and the second case 100B. The large diameter part 400B2 has a plurality of passing holes 450 at intervals in the peripheral direction, the passing holes 450 serving as channels for fluid.

### <Operation Mechanism of Check Valve>

The operation mechanism of the check valve 10 will be described. In the drawings, P1 represents the fluid pressure on the side of the inlet 110 and P2 represents the fluid pressure on the side of the outlet 120. When P2 ≥ P1, the valve is closed (see Figs. 1 and 3). Specifically, differential pressure of the fluid and the weight of the main valve body 200 bring it seated on the first valve seat 130. Thus, the gap between the valve portion 220 of the main valve body 200 and the first valve seat 130 is sealed. Similarly, the differential pressure of the fluid and the weight of the sub valve body 300 bring it seated on both the second valve seat 231 and the third valve seat 440. Thus, the annular gap G between the main valve body 200 and the guide member 400 is blocked. The second valve seat 231 and the third valve seat 440 are at equal levels when the main valve body 200 is seated on the first valve seat 130. Thus, the flow of fluid coming downward from the upper side in the vertical direction can be stopped.

When P1 > P2 and the load acting on the main valve body 200 and the sub valve body 300 by the differential pressure (P1 - P2) exceeds the total weight of the main valve body 200 and the sub valve body 300, the main valve body 200 and the sub valve body 300 are raised, so that the valve is opened (see Figs. 2 and 4). Thus, the lower end of the first guide member 400A guides the fluid coming from the inlet 110 radially outward and horizontally, the fluid flows through between the valve portion 220 of the main valve body 200 and the first valve seat 130 as shown by the arrow X1 in Fig. 4, and then the fluid flows toward the outlet 120 as shown by the arrow in Fig. 2. The fluid partly flows through the annular gap G between the main valve body 200 and the guide member 400 as shown by the arrow X2 in Fig. 4. Thus, the main valve body 200 is raised to open the valve under the pressure of the fluid flowing radially outward and horizontally from the central axis side of the main valve body 200. Thus, the upward flow of fluid from the lower side in the vertical direction is allowed.

When the load acting on the main valve body 200 and the sub valve body 300 by the differential pressure (P1 - P2) is lower than the total weight of the main valve body 200 and the sub valve body 300, the main valve body 200 and the sub valve body 300 are lowered by its own weight and the fluid pressure applied from above. The relationship among the weight of each member, the fluid pressure, and other factors lets the main valve body 200 to be seated on the first valve seat 130, and then the sub valve body 300 to be seated on the second and third valve seats 231 and 440. The inner peripheral surface of the through hole 310 of the sub valve body 300 and the sub valve body guide surface 420 of the second guide member 400B may be configured to slide on each other in order to reduce the speed at which the sub valve body 300 is lowered. Fig. 5 shows the state in which the main valve body 200 is seated and the sub valve body 300 is in the process of being lowered. The tapered surface 232 is provided, and when the sub valve body 300 is in the process of being lowered, the fluid on the side of the inlet 110 flows along the tapered surface 232 as shown by the arrow X3 in Fig. 5, and therefore the flow does not become stagnant.

The above described valve structure improves the responsiveness of the valve in closing/opening by the main valve body 200. The reason for the improvement is reduction in momentum of the fluid acting on the main valve body 200, which is known in the disclosure by PTL 1 and will not be described into details. The valve is closed in two stages by the main valve body 200 and the sub valve body 300, so that water hammer which may be caused by backflow in closing the valve can be reduced. This is because the amount of backflow is reduced by the main valve body 200 and then the valve is fully closed by the sub valve body 300.

### <Detailed Structure of Main Part of Check Valve>

With reference to Fig. 3 in particular, a main part of the check valve 10 will be described in detail. Let a seal area S1 be a total of a contact area of the sub valve body 300 and the second valve seat 231 and a contact area of the sub valve body 300 and the third valve seat 440 when the sub valve body 300 is seated on the second valve seat 231 and the third valve seat 440. A range T1 in Fig. 3 represents a range in which the sub valve body 300 and the second valve seat 231 come into contact with each other. An integration of the range T1 over the entire periphery gives the contact area of the sub valve body 300 and the second valve seat 231. A range T2 in Fig. 3 represents a range in which the sub valve body 300 and the third valve seat 440 come into contact with each other. An integration of the range T2 over the entire periphery gives the contact area of the sub valve body 300 and the third valve seat 440. Let a pressure-receiving area S2 be an area of a non-contact region between the contact region of the sub valve body 300 and the second valve seat 231 and the contact region of the sub valve body 300 and the third valve seat 440. A range T3 in Fig. 3 represents a non-contact range between the contact range T1 of the sub valve body 300 and the second valve seat 231 and the contact range T2 of the sub valve body 300 and the third valve seat 440. An integration of the range T3 over the entire periphery gives the pressure-receiving area S2. The check valve 10 is configured so that S2 ≥ S1 is satisfied.

### <Advantages of Check Valve According to Embodiment>

Since the check valve 10 according to the embodiment is configured so that S2 (the pressure-receiving area) ≥ S1 (the seal area) is satisfied, large downward force acts upon the sub valve body 300 when the pressure P2 on the upper side in the vertical direction with respect to the sub valve body 300 is higher than the pressure P1 on the lower side. This can reduce leakage of fluid into the annular gap G between the main valve body 200 and the guide member 400. More specifically, the sealing function by the sub valve body can be improved. This will be described in detail.

When the valve is closed, the load acting downward upon the sub valve body 300 is S2 x (P2 - P1), and thus the pressure acting on a seal surface of the sub valve body 300 in contact with the second valve seat 231 and the third valve seat 440 is (S2 x (P2 - P1)) ÷ S1. Thus, the configuration where S2 ≥ S1 is satisfied enables large force to act on the seal surface, so that leakage of the fluid to the annular gap G between the main valve body 200 and the guide member 400 can be reduced.

When the valve is opened from a closed state, the area S2 on which the differential pressure (P1 - P2) acts is greater than that in the conventional structure, and large upward force acts on the sub valve body 300. Thus the valve opens instantaneously. Therefore, the responsiveness of the valve in opening can be improved.

### (Other Features)

According to the embodiment, in order to satisfy S2 (the pressure receiving area) ≥ S1 (the seal area), the second valve seat 231 and the inner peripheral surface of the tubular portion 210 are connected by the tapered surface 232 in the main valve body 200. This configuration of members is a result of inventiveness in order to satisfy S2 ≥ S1 under a condition where the annular gap G between the outer peripheral surface of the first guide member 400A and the inner peripheral surface of the tubular portion 210 should not be increased in order to allow the vertical movement of the main valve body 200 substantially coaxially with the first guide member 400A Meanwhile, the structure is not limited to the above if S2 ≥ S1 is satisfied. In the following, some other examples will be described with reference to Figs. 6 to 9. In Figs. 6 to 9, the components identical to those according to the above described embodiment are designated by the same reference numerals. The basic structure and function are the same as those according to the first embodiment and will not be described in detail.

A first modification may be configured as illustrated in Fig. 6 so that the second valve seat 231 and the inner peripheral surface of the tubular portion 210 are connected by an inclined surface 233 having a curved line shape when viewed in a section. S2 ≥ S1 can be satisfied also in this configuration. A second modification may be configured as illustrated in Fig. 7 so that the second valve seat 231 is provided on the radially outer side of the upper surface of the main valve body 200, and an annular recess 234 may be provided on the inner side of the second valve seat 231. S2 ≥ S1 can be satisfied also in this configuration. A third modification may be configured as illustrated in Fig. 8 so that an annular recess 320 may be formed at the lower side surface of the sub valve body 300. S2 ≥ S1 can be satisfied also in this configuration. A fourth modification may be configured as illustrated in Fig. 9 so that the region of the third valve seat 440 is provided near the central axis and a tapered surface 441 is provided on the radially outer side of the third valve seat 440. S2 ≥ S1 can be satisfied also in this configuration. Any of these configurations may be combined as appropriate.

### [Reference Signs List]

- 10: Check valve
- 100: Case
- 100A: First case
- 100B: Second case
- 100C: Gasket
- 100D: Bolt
- 110: Inlet
- 120: Outlet
- 130: First valve seat
- 200: Main valve body
- 210: Tubular portion
- 220: Valve portion
- 230: Valve seat forming portion
- 231: Second valve seat
- 232: Tapered surface
- 233: Inclined surface
- 234: Annular recess
- 300: Sub valve body
- 310: Through hole
- 320: Annular recess
- 400: Guide member
- 400A: First guide member
- 400B: Second guide member
- 400B1: Small diameter part
- 400B2: Large diameter part
- 410: Main valve body guide surface
- 420: Sub valve body guide surface
- 430: Groove
- 440: Third valve seat
- 441: Tapered surface
- 450: Passing hole
- G: Annular gap

## Claims

1. A check valve which allows a fluid to flow upward from a vertically lower side and stops a fluid flowing downward from a vertically upper side, the check valve comprising:
a tubular member having a fluid inlet and a first valve seat formed so as to surround an upper side opening of the inlet;
a main valve body having a tubular portion, a valve portion extending radially outward from a lower end side of the tubular portion and configured to be seated on the first valve seat, and a valve seat forming portion extending radially outward from an upper end side of the tubular portion and provided with a second valve seat on an upper surface thereof;
a guide member having a main valve body guide surface provided at an outer peripheral surface to guide the tubular portion vertically, a fluid guide portion provided below the main valve body guide surface to guide a fluid flowing from the inlet radially outward and horizontally, and a third valve seat provided above the main valve body guide surface; and
a sub valve body configured to move up and down, and configured to be seated on both the second valve seat and third valve seat to block an annular gap formed between the main valve body and the guide member, wherein
the following expression is satisfied when the sub valve body is seated on the second and third valve seats,
S2 ≥ S1
wherein a seal area S1 is a total of a contact area of the sub valve body and the second valve seat and a contact area of the sub valve body and the third valve seat, and a pressure-receiving area S2 is an area of a non-contact region at a lower end surface of the sub valve body between a contact region of the sub valve body and the second valve seat and a contact region of the sub valve body and the third valve seat.
